# EUROPEAN PATENT APPLICATION

(11) **EP 4 793 534 A1**
(43) Date of publication of application: **19.08.2026**
(21) Application number: 26158321.5
(22) Date of filing: 12.02.2026
(51) Int. Cl.: F16M 11/16, F16M 11/24

(54) **RELEASE MECHANISM FOR AN ADJUSTABLE ANGLE LEG OF A STAND**

(30) Priority: 13.02.2025 GB 202502158
(71) Applicant: 3 Legged Thing Limited, Bury End Stagsden Bedfordshire MK43 8TS (GB)
(72) Inventor: LENIHAN, Daniel, Stagsden, MK43 8TS (GB)
(74) Representative: Gill Jennings & Every LLP

(57) **Abstract**

A release mechanism suitable for a leg of a tripod or bipod, the release mechanism being configured to regulate ability to adjust an angle of the leg (10), the mechanism comprising a latch (15) and a trigger (16) connected to the latch (15), wherein the latch (15) is moveable between a lock position and a release position by movement of the trigger (16), the latch (15) being configured to engage a latching surface at a leg-canopy (20) interface for a stand in the lock position and to be separated from the latching surface in the release position, and the trigger (16) being depressible into a recess (11) at the leg-canopy (20) interface to move the latch (15) to the release position.

## Description

### FIELD OF THE INVENTION

The present invention relates to stand leg systems, such as tripod and bipod leg systems, including foldable stands, tripods and bipods that have foldable legs, and stands with adjustable angle legs.

### BACKGROUND

Stands, such as tripods and bipods, can include legs connected to a canopy. The canopy provides a common joint from which the legs extend. The canopy is also used to support a central column or on which to mount equipment, such as a camera, binoculars or a firearm.

Users sometimes wish to adjust the angle of the legs to provide a wider or narrower spread of the legs depending on the circumstances of the use of the tripod, bipod or other type of stand. Additionally, for storage purposes, the legs are folded towards each other by reducing the angle between the legs. In some tripods, bipods and other stands, the legs fold upward in a counter-fold manner to fold against a central column by decreasing the angle between each leg and the central column. In some tripods, bipods and other stands, the legs fold upward in a counter-fold manner without a central column, or with just a mounting plate or a head mounted to the canopy.

To avoid the angle of each leg changing unexpectedly or when not wanted, mechanisms are provided that hold each leg and maintain the leg angle once set. One such mechanism is to provide a projection on the canopy to which a leg is connected and pivots around. Teeth are provided on the projection, and a latch is provided on the leg. The latch engages the teeth and locks against at least one tooth when something acts to change the angle of the leg restricting the movement.

The latch is able to be released to allow the angle to be changed when desired. This is achieved by the use of a lever or catch. This is provided on the outer side of the leg to allow access by a user and to allow the user to move the lever or catch to release the latch.

We have found that such levers and catches can be difficult to use due to the finger or grip strength sometimes needed to move or pull them or due to the mechanism becoming stuck. Further, when a user is wearing gloves, such as in cold conditions, the lever or catch is often too small for a user to be able to interact with well enough or to gain sufficient purchase on to release the latch while wearing the gloves. For users with arthritis or other conditions, gripping existing levers and catches can be difficult or painful to operate.

There is thus a need for an improved means of allowing and restricting angle adjustment of an adjustable angle leg of a tripod, bipod, other type of stand or other arrangement.

### SUMMARY OF INVENTION

According to a first aspect, there is provided a release mechanism for (i.e. suitable for) a leg of a stand with at least one adjustable angle leg, the release mechanism being configured to regulate ability to adjust an angle of the leg, the mechanism comprising a latch and a trigger connected to the latch, wherein the latch is moveable between a lock position and a release position by movement of the trigger, the latch being configured to engage a latching surface at a leg-canopy interface for (i.e. suitable for) a stand in the lock position and to be separated from the latching surface in the release position, and the trigger being depressible into a recess at the leg-canopy interface to move the latch to the release position.

The use of a trigger depressible into a recess to release a latch provides a pushbutton style movement. This switch from a pull release reduces the significance of grip strength because it allows a push motion to be used instead. If needed, a user is able to apply their arm and body strength instead of only their finger strength for such a motion. This makes release of a latch easier for a user, including in non-perfect conditions, such as when gloves are worn. This also reduces difficulty should the latch become wedged or stuck. This thus permits easier angle adjustment for the leg.

Further, this allows a user to have a single engagement with the leg. By having the depressible trigger, the user is able to grip the leg and depress the trigger and go on to adjust the leg angle without moving the position of their hand on the leg. This is instead of existing release mechanisms that require two hands or for the mechanism to be released, a user's hand moved to grip the leg and then for the leg to be moved.

Typically, the release mechanism may further comprise a retainer engaged between the latch or trigger and a component of the leg-canopy interface, wherein the retainer is arranged in use to urge the latch towards the lock position by exerting force on the latch or trigger and the component. This provides a bias towards the lock position. This bias reduces the likelihood of an unintended movement of the latch to the release position. Further, this provides an ability for the latch to be returned to the lock position, such as by the trigger being reset towards an undepressed position securing the positioning of the leg when not in use.

The retainer may be engaged to the latch (and/)or trigger, and/or the retainer is engaged to the component. While the retainer could be a separate component located between the latch and/or the trigger as well as the component, this does not provide a connection of the retain to any of these. By the retainer being engaged to the latch, trigger and/or retainer this connection is provided, which reduces the likelihood of the retainer positioning moving and no longer functioning.

Typically, the retainer is engaged to (only) the trigger.

The retainer could be an expandible foam plug, a resiliently deformable or elastic band, a piston or some other means able to push or pull, typically, the retainer may be a spring. This provides a simple mechanism that is easy to install, reliable and hardwearing limiting a need to service the mechanism.

Typically, the spring is a compression spring. While a tension spring could be used, implementing a compression spring means a connection only needs to be provided at one point or at one end and the other end can remain unconnected, while, as noted above, still able to engage with other components. This simplifies manufacture and limits the number of connections able to fail.

While the latching surface can be on the leg, the latching surface is typically on the canopy.

The recess may be in the canopy. Typically, however, the recess is on the leg (i.e. is a recess in the leg).

Typically, the recess may be located on an in-use inside of the leg. Typically, the trigger may be depressible from the in-use inside of the leg. This provides the trigger on a "back" of the leg when in use. If the leg is counterfolded, such as for storage, this would be on an outwardly facing side of the leg, compared to an in-use arrangement where this is an inwardly facing side. This reduces the chances of accidental release of the mechanism because it reduces the chances of the trigger being knocked unintentionally. Consistent with points above, this is also a more comfortable location on the leg for a user to grip. This makes use easier for a user and also being reliant on (only) one movement instead of multiple movements to put the leg in a condition where it is ready to move.

Typically, the latch and trigger may be located on opposing sides of the leg. This keeps the movement between the lock position and release position simple and allows for a consistent movement direction of the latch and trigger between the positions. While other mechanisms can be envisaged, such as mechanisms that rotate the latch or that cause the latch and trigger to move in opposite directions to each other, this arrangement provides a reliable configuration for allowing locking and releasing.

Typically, in the release position the latch may be extended away from the latch-canopy interface. This positions the latch clear of the latch-canopy interface avoiding the possibility of the latch catching during any adjustment of the angle of the leg.

Typically, the latch and trigger may have a fixed connection. The connection between the latch and trigger may be moveable. However, a fixed connection is typically stronger, more reliable and simpler, enhancing the overall reliability of the release mechanism.

The fixed connection may be provided by a plate. This plate may be connected to the trigger at one end. The plate may be connected to a latch at one end. The plate may also be connected to the trigger and the latch at opposing ends. The plate can be referred to as a sled.

The plate may be moveably connected to the leg. This could be through a slidable connection, such as a rail or catch. Typically, however, the plate may include an aperture, a fastener being located through the aperture, the fastener being connected to the leg. The fastener may be a bolt.

The release mechanism may have a pull tab on the latch. This allows greater versatility to the user as to how they are able to operate the release mechanism.

According to a second aspect, there is provided a leg for (i.e. suitable for) a stand with at least one adjustable angle leg, the leg comprising a recess and a release mechanism according to the first aspect, wherein the trigger of the release mechanism is located in the recess.

The recess is able to be located at any point along a length of the leg. Typically, however, the recess may be at an end of the leg at the leg-canopy interface. This limits the distance between the trigger and latch, thus providing a stronger connection between the trigger and latch which is less likely to be damaged to not function as intended.

Typically, the recess may be provided by a yoke at the end of the leg at the leg-canopy interface, the yoke being connected in use to the canopy at the leg-canopy interface. This provides the recess in a portion of the leg that is already shaped to accommodate a portion of the canopy, allowing minimal material to be omitted, thus minimising any weakening of the leg when providing the release mechanism.

According to a third aspect, there is provided a stand comprising a canopy; a leg connected to the canopy, the leg being connected to the canopy at a leg-canopy interface; and a release mechanism according to the first aspect.

In relation to the third aspect, the leg may be a plurality of legs, each leg being connected to the canopy at a respective leg-canopy interface, each leg-canopy interface having a release mechanism according to the first aspect.

The stand may be one of a tripod, bipod or monopod.

The leg may be the leg according to the second aspect, the canopy having a latching surface at each leg-canopy interface.

### BRIEF DESCRIPTION OF DRAWINGS

Example mechanisms, legs and stands are described in detail below with reference to the accompanying drawings, in which:
Figure 1 shows a partial view of an example stand in a lock position;
Figure 2 shows a partial view of an example stand in a release position;
Figure 3 shows a sectional view of an example stand in a lock position; and
Figure 4 shows a further partial view of an example stand in a lock position.

### DETAILED DESCRIPTION

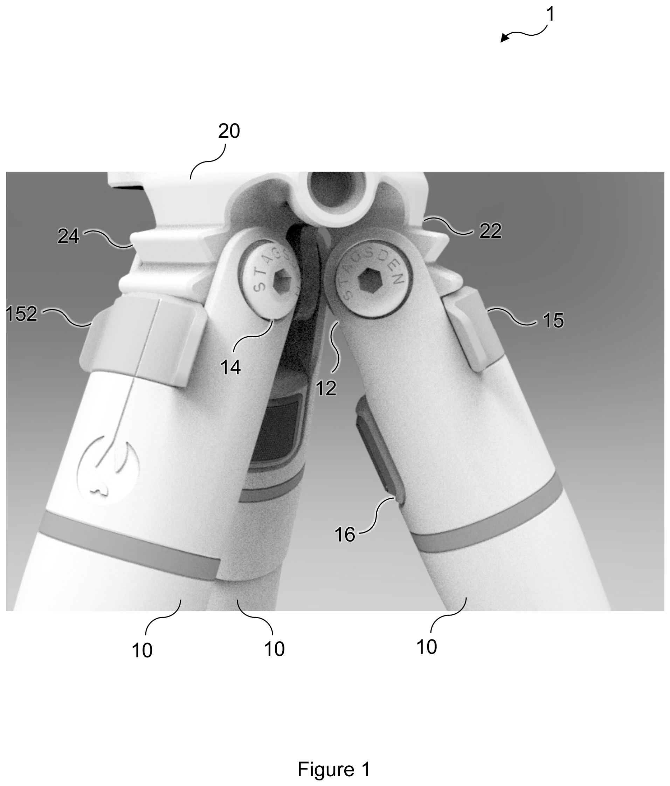

An example stand, in the form of a tripod, is generally illustrated at 1 in Figure 1. This includes a plurality of legs 10, each of which is connected to a canopy 20 at an end. In other examples, a similar leg and canopy arrangement is provided for more legs or fewer legs.

The term "tripod" is used below in relation to several examples. This is to reflect the specific examples shown in the drawings. However, use of the term "tripod" below can be considered as interchangeable with the term "stand", and all examples below referring to a tripod apply equally to other stands (except where stated otherwise), such as stands with one or more legs, with such legs, for example, having an adjustable angle relative to some other part of the stand.

Other example stands which are able to be implemented in line with examples described herein include bipods, monopods (such as monopods that have a canopy), light stands, music stands, microphone stands and frames with one or more legs. This is typically because the examples below do not rely on the described article being a tripod, and instead only rely on there being a leg connected to a further component with a release mechanism that regulates angle of the leg relative to a further component.

The region at which each leg 10 and canopy 20 are connected to each other can be considered as a leg-canopy interface. In some examples, at each leg-canopy interface, the canopy has a projection 22. This is a complementary shape to a yoke 12 of the respective leg in various examples.

In several examples, at least one projection 22 has a generally circular profile. By this, we intend to mean that its outwardly facing surface, rather than its sides, defines an overall circular shape. In other examples, this profile is able to be a different shape.

For various examples, the at least one projection 22 includes teeth 24 on its outwardly facing surface. As can be seen from the example shown in Figure 1, these teeth extend across the width of the outwardly facing surface of each respective projection in some examples.

Turning to the form of at least some of the legs 10, in a number of examples, these have a body and, as set out above, a yoke 12 at an end. This forms a U shape at the end of the leg into which a projection 22 fits in use in some examples.

The yoke 12 and projection 22 are connected in various examples by a bolt 14. This passes through apertures in the yoke and projection and is secured in some examples within the projection. In other examples, the bolt is secured with a nut connected to an end of the bolt. This provides a pivot about which the leg is able to be rotated in several examples.

As set out above, the yoke 12 has sides only in various examples. This provides an opening between the sides. In some examples, this opening is orientated to form an aperture through the leg between a side of the leg facing outward during use and a side of the leg facing inward during use. This means that the shape of the yoke 12 provides a space between a base of the yoke and the projection 22 in several examples.

In some examples, within this space, a latch 15 is located. In various examples, such as the example shown in Figure 1, this is located on an in-use outwardly facing side of the leg 10.

In several examples, a trigger 16 is also located in this space. In a number of examples, such as the example shown in Figure 1, this is located on an in-use inwardly facing side of the leg 10.

In the example shown in Figure 1, the trigger 16, has a rubber pad against which a user's finger is placed in use. In other examples, another pad type is provided or the pad is not present.

The example of Figure 1, shows the release mechanism of the latch and 15 and trigger 16 in a lock position. In this position, the latch is engaged with a latching surface of the projection 22. In some examples, this is one of the teeth 24 of the projection. This restricts the ability of the leg 10 to rotate relative to the canopy 20 by the tooth acting against the latch if rotation of the leg moves the latch towards the tooth. In this manner, in various examples, the latch acts as a pawl and the teeth act as a ratchet.

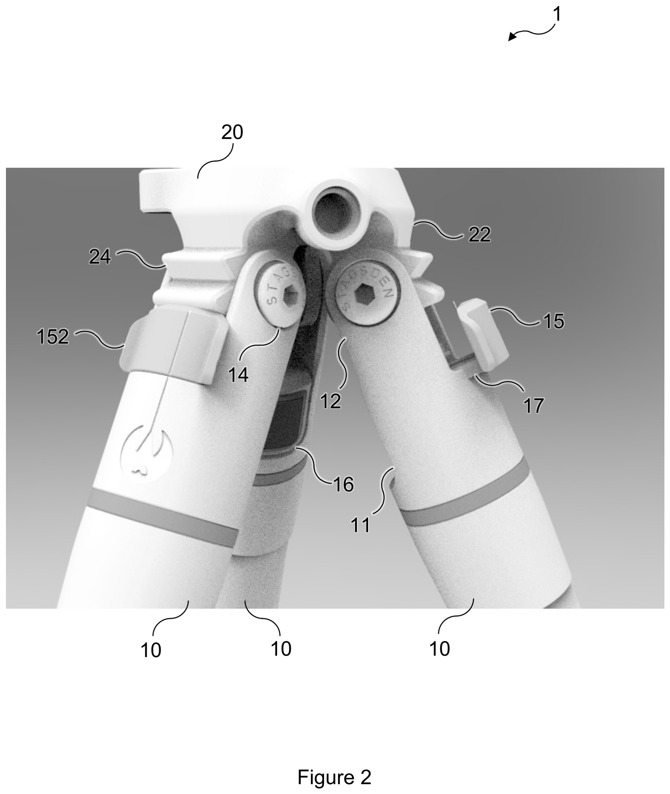

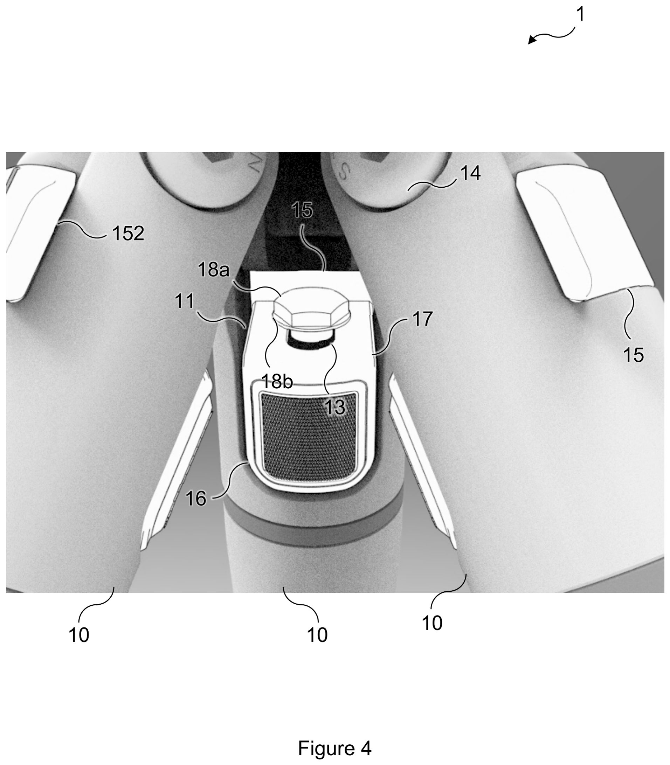

In various examples, the trigger 16 sits within a recess 11. This is most visible in Figure 2 and Figure 4. The recess forms part of the space defined by the shape of the yoke 12 in some examples.

In order to permit the angle of the leg 10 to be modified, in several examples, the trigger 16 is depressed, such as by being pushed, into the recess 11. In a number of examples, this causes the latch 15 to move out of engagement with the teeth 24 on the projection 22 of the canopy 20 into a release position.

In some examples, such as the example shown in Figure 2, this disengagement is achieved by the latch 15 being moved away from the body of the leg 10. This moves the latch outward from the in-use outwardly facing surface of the leg, so further away from the in-use inwardly facing surface in various examples.

To support the latch 15 in this position, the latch is connected to a sled plate 17 in several examples. As most visible in Figure 4, this sled plate is engaged with the leg 10 by a fastener 18 in some examples.

In some examples, the plate 17 has an aperture 13 therethrough. A bolt, as the fastener 18 in some examples, is provided through the aperture to hold the plate to the leg 10. This is achieved in various examples by the plate being located on the base of the yoke 12.

The bolt 18 has two components in some examples. In various examples, these components are the bolt body 18a and a washer 18b. The washer is located between the bolt body and the plate 17 in some examples. This assists with the ability of the plate to slide relative to the bolt.

As well as being connected to the latch 15, in several examples, the plate 17 is also connected to the trigger 16. In various examples, opposing ends of the plate are connected to the latch and trigger respectively. In other examples, one or both of the latch and trigger are able to be connected to the plate at different points.

The connection between the plate 17 and trigger 16, in some examples, is what causes the movement described above of the latch 15 from a lock position into a release position on movement of the trigger.

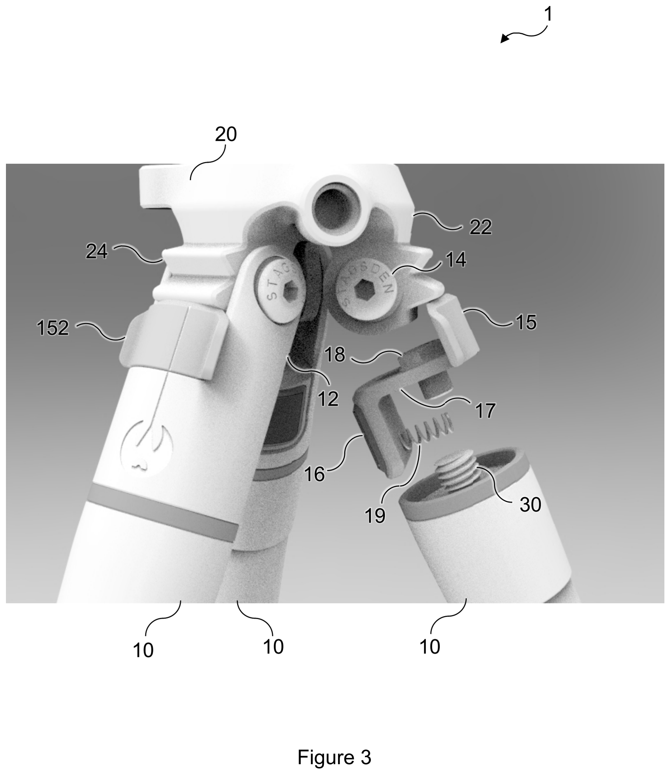

In various examples, such as the example shown in Figure 3, the trigger 16 is urged away from the leg 10 outwardly from the recess 11. This is achieved in some examples by a retainer 19. This takes the form of a spring in several examples, such as a compression spring in a number of examples. In other examples, an alternative to a spring is provided and/or the retain is located elsewhere.

The retainer 19 is connected to the trigger 16 in various examples. In other examples, the retain is connected to the leg 10 alternatively or additionally, or is only engaged with each of the trigger and leg by the outward expansion force provided by the spring action in the example shown in Figure 3.

In some examples, the retainer 19 urges the trigger 16 towards the lock position when a user is not applying pressure to the trigger. This provides an ability for the trigger and latch 15 to return towards or to the lock position when not in use in several examples.

As can be further seen in the example shown in Figure 3 (as well as in Figure 1 and Figure 2), the projection 22 has multiple teeth in various examples. Movement of the latch 15 between the lock position and the release position allows engagement of the latch to be moved from one tooth to another or for the leg to be moved to an alternative position. In some examples, one surface of the latch engages a surface of one tooth and another surface of the latch engages another surface or a surface of another tooth. This allows rotation of the leg in two directions.

In various examples, such as shown in Figure 3, the latch 15, trigger 16 and plate 17 are formed of a single piece. In other examples, these are multiple pieces joined together.

The combined latch 15, trigger 16 and plate 17 form an S shape in some examples. By this we intend to mean that, from the side, the shape is similar to an "S". This means that the latch and the trigger are located at different points along the length of the leg 10 in various examples. While these could be a U shape instead, the S shape providing the trigger and latch at different locations along the length of the leg means that when a user grasps the leg and pushes the trigger, depressing it into the recess 11, the user's hand is not impeding movement of the latch.

As an example of the latch 15, trigger 16 and plate 17 being multiple pieces joined together instead of a single piece, in some examples, the trigger is connected to a pivot. In various examples, this pivot is connected at an end of the trigger. In other examples, the pivot is connected to another part of the trigger.

Continuing with such examples, at the (opposing) end of the trigger a connection to the plate is provided. This connection is a rotatable connection in several examples, such as by having interdigitated lugs on the trigger and plate with alignable bores that a pin is passed through in use.

By implementing this example arrangement, in a number of examples, a user is able to push the trigger. This causes the end of the trigger connected to the plate to be depressed into the recess 11 with the other end of the trigger rotating about its pivot (which may be provided in a similar form as the connection between the tirgger and plate as a connection between the trigger and leg).

In a similar manner to that set out above, this causes the plate to slide, moving the latch out of the lock position towards the release position. As with examples set out above, the retainer 19 is able to be provided to urge the trigger outwardly from a depressed position within the retainer. This example assists with reducing tilting or rotation of the latch.

Further, due to the trigger 16 being further from the pivot of the leg than the latch 15 in some examples, when the user moves the latch to the release position by pushing the trigger, this is easier than if the trigger were aligned with the latch. This is due to the additional leverage provided by the user's hand position being further along the leg.

We have found that the S shape can cause rotation of the latch 15, trigger 16 and plate 17 piece. To reduce this, more restrictive tolerances are used on the spacing between the fastener 18 and the plate.

In various examples, the latch 15 has one or more pull tabs 152. In some examples, these are wings located at lateral edges of the latch. In other examples, these are projections of some form and/or are located in other positions on the latch. The pull tabs allow a user to grip the latch to pull the latch from the lock position towards the release position as an alternative or in addition to using the trigger 16.

The example shown in Figure 3 shows a threaded projection 30 within the leg. This is provided in some legs to allow the leg to be removed and replaced with another, with a separate foot or to be used as a monopod.

While the examples shown in Figures 1 to 4 show a tripod, the components described above apply equally to a bipod or another pod or stand with a plurality of legs or with only a single leg connected to another component. As an example, a monopod or other single-leg stand can be used, for example, as a video rig or for another purpose. Such a monopod includes a canopy of a tripod with two of the three legs removed. In place of the two legs that have been removed, equipment, such as a camera and light, flash module, reflector or other equipment is connected. The remaining leg is connected to the canopy and has the release mechanism described above.

The release mechanism of the trigger connected to the latch, which is moveable between a lock position and the release position is able to be implemented in one leg (only) or in multiple legs. While there is a leg-canopy interface, the components of the release mechanism all form part of the leg in various examples.

The above examples above all refer to a leg-canopy interface and the release mechanism acting at that location. This release mechanism can also be used at an interface between two portions of a leg should the leg have a foldable joint. The release mechanism would then be provided at the joint.

## Claims

1. A release mechanism for a leg of a stand with at least one adjustable angle leg, the release mechanism being configured to regulate ability to adjust an angle of the leg, the mechanism comprising a latch and a trigger connected to the latch, wherein
the latch is moveable between a lock position and a release position by movement of the trigger, the latch being configured to engage a latching surface at a leg-canopy interface for a stand in the lock position and to be separated from the latching surface in the release position, and the trigger being depressible into a recess at the leg-canopy interface to move the latch to the release position.

2. The release mechanism according to claim 1, further comprising a retainer engaged between the latch or trigger and a component of the leg-canopy interface, wherein the retainer is arranged in use to urge the latch towards the lock position by exerting force on the latch or trigger and the component.

3. The release mechanism according to claim 2, wherein the retainer is engaged to the latch or trigger, and/or the retainer is engaged to the component.

4. The release mechanism according to claim 2 or claim 3, wherein the retainer is a spring.

5. The release mechanism according to any one of the preceding claims, wherein the latching surface is on the canopy.

6. The release mechanism according to any one of the preceding claims, wherein the recess is on the leg.

7. The release mechanism according to claim 6, wherein the recess is located on an in-use inside of the leg, the trigger being depressible from the in-use inside of the leg.

8. The release mechanism according to any one of the preceding claims, wherein the latch and trigger are located on opposing sides of the leg.

9. The release mechanism according to any one of the preceding claims, wherein in the release position the latch is extended away from the latch-canopy interface.

10. The release mechanism according to any one of the preceding claims, wherein the latch and trigger has a fixed connection.

11. The release mechanism according to claim 6 and claim 10, wherein the latch, fixed connection and trigger are an S-shape, thereby the trigger being located at least partially axially offset from the latch on the leg.

12. A leg for a stand with at least one adjustable angle leg, the leg comprising a recess and a release mechanism according to any one of the preceding claims, wherein the trigger of the release mechanism is located in the recess.

13. The leg according to claim 12, wherein the recess is at an end of the leg at the leg-canopy interface; and wherein the recess is provided by a yoke at the end of the leg at the leg-canopy interface, the yoke being connected in use to the canopy at the leg-canopy interface.

14. A stand comprising a canopy; a leg connected to the canopy, the leg being connected to the canopy at a leg-canopy interface; and a release mechanism according to any one of claims 1 to 11.

15. The stand according to claim 14, wherein each leg is the leg according to claim 12 or claim 13, the canopy having a latching surface at each leg-canopy interface.
